# EUROPEAN PATENT SPECIFICATION

(11) **EP 1 046 574 B1**
(45) Date of publication and mention of the grant of the patent: **06.08.2003**
(21) Application number: 00500071.6
(22) Date of filing: 18.04.2000
(51) Int. Cl.: B62D 47/00

(54) **Nestable vehicles**
Ineinanderschachtelbare Fahrzeuge
Véhicules emboîtables

(30) Priority: 19.04.1999 ES 9900800
(43) Date of publication of application: 25.10.2000
(73) Proprietor: Rendall, William M.C., 28003 Madrid (ES)
(72) Inventor: Rendall, William M.C., 28003 Madrid (ES)

(56) References cited:
- EP-A- 0 816 210
- US-A- 3 889 770
- US-A- 4 249 629
- US-A- 5 417 300

## Description

The object of the present invention is to provide a perfected nestable automotive vehicle.

An automotive vehicle according to preamble of claim 1 is known from the patent US-A-5 417 300.

The innovation of the invented vehicle is the incorporation of a multiple towing system that enables the group transfer of several vehicles driven by a single operator, thereby facilitating its redistribution for use as a public vehicle.

This multiple towing system is made possible by the features of claim 1.

By means of the invented vehicle, an efficient concept of vehicle transfer and parking of vehicle groups is put into operation in a compact form.

This vehicle can be offered for hire by means of "smart cards" for example or by means of any other public use, as found with experiments in Brussels and Turin. With a multiple towing system a rapid and efficient redistribution of a car fleet is made possible, with a minimum number of operators, allowing a greater flexibility of the points of delivery and return. One could hope that the use of these vehicles might become extensive thereby creating a reduction in private car ownership and solving associated problems, such as those of parking for example.

The purpose of the present invention is to encourage the use of public cars and to offer an efficient alternative to the private car, thereby helping to restrict some of the negative consequences of its abusive use.

According to the invention, the vehicle has four wheels, of which some have an autonomous means of motorization, this being preferably of reduced dimensions with an electric motor or not.

Obviously, the invention does not concentrate on precise constructive details, for example the shape of the bodywork, but more essentially on the multiple towing system produced due to the ability it has to couple in a rigid way with another vehicle the same or similar, combined with a steering system produced by the central pivoting of the chassis.

Although proposals are known of for coupling cars in order to save parking space, at present no vehicle is known of that incorporates a multiple towing system for transfer in groups by means of a rigid linking system between vehicles thereby achieving that all vehicles follow the same path.

In order to understand not only the vehicle construction, but also the actual use of the invented vehicle more easily, the following practical example is given of how it could be used, this being merely enunciatory and by no means limitory of the same. Although the structure of the vehicle is such that the half of the vehicle which couples inside the housing of the other half may indifferently be the front or back part, for the sake of simplicity only one of the possible versions is shown graphically: that in which the housing is situated between the front wheels, in order to allow and enable the housing of the rear wheels of another vehicle the same or similar. All this being as is shown in the attached drawing, in which:
Figure 1 shows a diagrammatic view of a series of the invented vehicle coupled in a row.
Figure 2 shows a sectional plan view of figure 1.

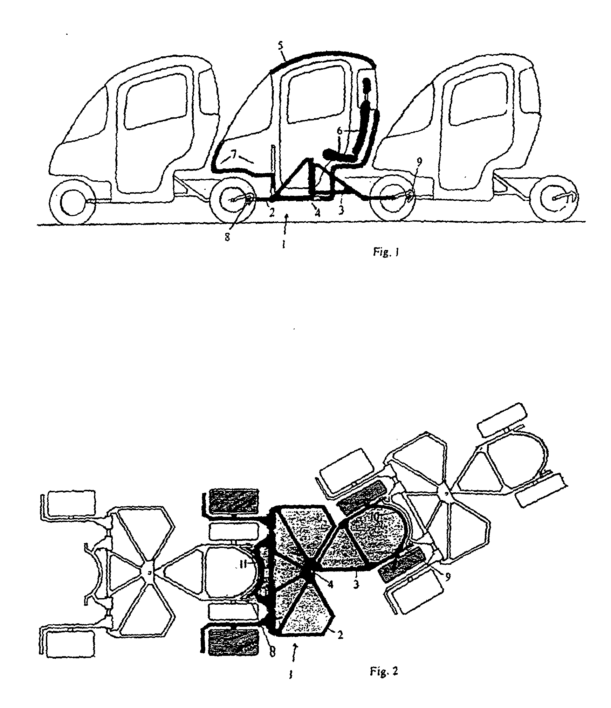

Regarding the drawings, the invented automotive vehicle 1 is divided in one half 2, with housing between the wheels and another half 3 that fits into the housing of the half 2 of another vehicle, joined by means of a pivot 4. The vehicle 1 has a cabin 5 in which a seat 6 and a luggage compartment 7 are found.

The vehicle 1 has two hitching points 8 to which another vehicle the same or similar is connected by means of two hooks 9.

The half 2 shows a central housing 11 that facilitates the fitting of a central guide 10 in the half 3 of another vehicle as shown in the drawings.

## Claims

1. Automotive vehicle **(1)** having a multiple towing system comprising a combination of: a) a chassis structure, b) a steering system **characterised in that**
a) the chassis structure is made of two halves **(2, 3),** front and back, where the distance between the wheels of one of the halves **(3)** having a central guide **(10)** is necessarily less than the distance between the wheels of the other half **(2)** having a central housing **(11)** suited for coupling with said central guide **(10)** of another vehicle **(1)** of the same type such that when they are coupled a rigid coupling is produced by means of a double hitching device **(8, 9, 10, 11)** between both halves **(2, 3)** of said two vehicles **(1)** and by said means **(8, 9, 10, 11)** a module is formed with a single axis of four wheels, and where
b) the steering system is pivoted in the centre **(4)** of the two halves **(2, 3)** that make up the vehicle **(1),** in a way similar to certain street cleaning vehicles, which enables the central pivoting of the chassis such that when they are coupled rigidly, the vehicles **(1)** being towed necessarily has to follow the same path as the vehicle **(1)** towing it.

2. Automotive vehicle, as described in claim 1, **characterised in that** the coupling by means of the double hitching device **(8, 9, 10, 11)** is directed by means of a central guide **(10)** which is formed in the middle of one half **(2, 3)** as a curved concave shape and in the other half **(2, 3)** as a curved convex shape.

3. Automotive vehicle described in the claim 1 **characterised in that** the coupling by means of the double hitching device **(8, 9, 10, 11)** is directed by means of a central guide **(10)** in one half **(2, 3)** in the shape of a closed polygonal line and the other half **(2, 3)** in the shape of an open polygonal line.

## Patentansprüche

1. Kraftfahrzeug **(1)** mit einem Mehrfach-schleppsystem, bestehend aus einer Kombination aus a) einer Fahrgestellkonstruktion, b) einem Lenksystem,
**dadurch gekennzeichnet dass**
a) die Fahrgestellkonstruktion aus zwei Hälften **(2,3),** vorderer und hinterer Teil, hergestellt ist, wobei der Abstand zwischen den Rädern der einen Hälfte **(3)**, die eine zentrale Führung aufweisen **(10)**, notwendigerweise geringer ist als der Abstand zwischen den Rädern der anderen Hälfte **(2)**, die ein zentrales Gehäuse **(11)** aufweisen, welches zur Kopplung mit der genannten zentralen Führung **(10)** eines anderen Fahrzeugs **(1)** desselben Typs geeignet ist, so dass, wenn sie gekoppelt sind, zwischen den beiden Hälften **(2,3)** dieser beiden Fahrzeuge **(1)** durch eine doppelte Anhängevorrichtung **(8, 9, 10, 11)** eine starre Verbindung hergestellt und durch die genannten Mittel **(8, 9,10,11**) ein Modul mit vierrädriger Einzelachse gebildet wird,
und bei der
b) das Lenksystem in der Mitte zwischen den beiden das Fahrzeug **(1)** bildenden Hälften **(2,3)** in ähnlicher Weise schwenkbar gelagert ist, wie dies bei bestimmten Straßenreinigungsfahrzeugen der Fall ist, was ein Schwenken des Fahrgestells in der Mitte ermöglicht, dergestalt dass, wenn sie starr miteinander verbunden sind, das gezogene Fahrzeuge dem gleichen Weg folgen muss, wie das ziehende Fahrzeug **(1)**.

2. Kraftfahrzeug wie in Anspruch 1 beschrieben, **dadurch gekennzeichnet, dass** die durch die doppelte Anhängevorrichtung **(8, 9, 10, 11)** geschaffene Verbindung mittels einer zentralen Führung **(10)** ausgerichtet wird, die in der Mitte einer Hälfte **(2,3)** als gebogene, konkave Form und in der anderen Hälfte **(2,3)** als gebogene, konvexe Form ausgebildet ist.

3. Kraftfahrzeug wie in Anspruch 1 beschrieben, **dadurch gekennzeichnet, dass** die durch die doppelte Anhängevorrichtung **(8, 9, 10, 11)** geschaffene Verbindung mittels einer zentralen Führung **(10)** ausgerichtet wird, die in einer Hälfte **(2,3)** als geschlossener Polygonzug und in der anderen Hälfte **(2,3)** als offener Polygonzug ausgebildet ist.

## Revendications

1. Véhicule automobile (1) avec un système de remorquage multiple au moyen de a) une structure de châssis et b) un système de direction dont les caractéristiques sont :
a) la structure du châssis est constituée de deux moitiés (2,3), le devant et le derrière, où la distance entre les roues de l'une des moitiés (3), possédant un manchon de guidage central (10), est nécessairement inférieure à la distance entre les roues de l'autre moitié (2) ayant un carter central (11) conçu pour l'attelage avec le manchon de guidage (10) d'un autre véhicule du même type de telle sorte que lorsqu'ils sont assemblés, un attelage rigide se produit entre les deux moitiés (2,3) des deux véhicules (1) et ainsi grâce aux dispositifs (8,9,10,11) se forme un module avec un seul essieu de quatre roues, où :
b) Le système de direction est monté sur un pivot au centre (4) des deux moitiés (2,3) qui forment le véhicule (1) de la même façon que dans le cas de certains véhicules de nettoyage des rues, ce qui permet de faire pivoter au centre le châssis de telle façon que lorsqu'il est attelé rigidement le véhicule (1) tracté doit nécessairement suivre le même chemin que le véhicule (1) de traction.

2. Le véhicule automobile, tel que décrit dans la revendication 1, **caractérisé par** une traction au moyen d'un dispositif de double attelage (8, 9, 10,11), est dirigé au moyen d'un manchon de guidage central (10) qui, placé au milieu de l'une des moitiés (2,3), a une forme de courbe concave et sur l'autre moitié (2,3) a une forme de courbe convexe.

3. Le véhicule automobile décrit dans la revendication 1, **caractérisé par** une traction au moyen d'un dispositif de double attelage (8, 9, 10,11), est dirigé au moyen d'un manchon de guidage central (10) qui sur l'une des moitiés (2,3) a une forme rectiligne polygonale fermée et sur l'autre moitié (2,3) une forme rectiligne polygonale ouverte.
